# EUROPEAN PATENT SPECIFICATION

(11) **EP 0 178 366 B1**
(45) Date of publication and mention of the grant of the patent: **01.09.1993**
(21) Application number: 85100010.9
(22) Date of filing: 02.01.1985
(51) Int. Cl.: G02B 6/16, G02B 6/44

(54) **Multi core optical fiber**
Optische Mehrkernfaser
Fibre optique multifilaire

(30) Priority: 05.01.1984 JP 21/84
(43) Date of publication of application: 23.04.1986
(73) Proprietor: SUMITOMO ELECTRIC INDUSTRIES LIMITED, Osaka-shi, Osaka 541 (JP); NIPPON TELEGRAPH AND TELEPHONE CORPORATION, Tokyo (JP)
(72) Inventor: Suzuki, Shuzo c/o Yokohama Works of Sumitomo, Yokohama-shi Kanagawa-ken (JP); Ogasawara, Ichiro c/o Yokohama Works of Sumitomo, Yokohama-shi Kanagawa-ken (JP); Yokota, Hiroshi c/o Yokohama Works of Sumitomo, Yokohama-shi Kanagawa-ken (JP); Sumida, Shim, Mito-shi Ibaraki-ken (JP)
(74) Representative: Hansen, Bernd, Dr. Dipl.-Chem.

(56) References cited:
- EP-A- 0 017 742
- GB-A- 1 562 676
- US-A- 4 070 091
- US-A- 4 134 642
- US-A- 4 147 407
- US-A- 4 270 840
- PATENT ABSTRACTS OF JAPAN, vol. 7, no. 184 (P-216)[1329], 13th August 1983; & JP - A - 58 86501
- ELECTRONICS & COMMUNICATIONS IN JAPAN, vol. 63, no. 8, August 1980, pages 69-77, Silver Spring, Maryland, US; R. YAMAUCHI et al.: "Residual stresses of fibres in tape-type optical cable and their reduction"

## Description

The present invention relates to a multi core optical fiber. More particularly, it relates to a multi core optical fiber having improved mechanical strength and a low cross-talk even if a distance between the adjacent cores is short.

A multi core optical fiber having a plurality of light conducting cores surrounded by a cladding layer of lower refractive index than the cores is disclosed in the US-A-4,134,642. To prevent tapping of the optical signals propagating in the optical fiber cores a light conducting layer is provided on the cladding layer with a refractive index higher than that of the cladding layer. A second layer surrounds the light conducting layer and has a refractive index lower than that of the light conducting layer. An optical monitor signal can be propagated in the light conducting layer and any attempt to tap the fiber to abstract data information from the optical signal propagating in the optical fiber core results in the aberration of the monitoring signal. To allow independent propagation of the monitoring signal in the light conducting layer and the optical signals in the core without any cross-talk therebetween, the cores and the light conducting layer are spaced at distances large enough to ensure optical isolation of the cores and the light conducting layer from each other.

This arrangement of optical fibers with a light conducting layer relates to increasing the security of optical signals propagating in the cores.

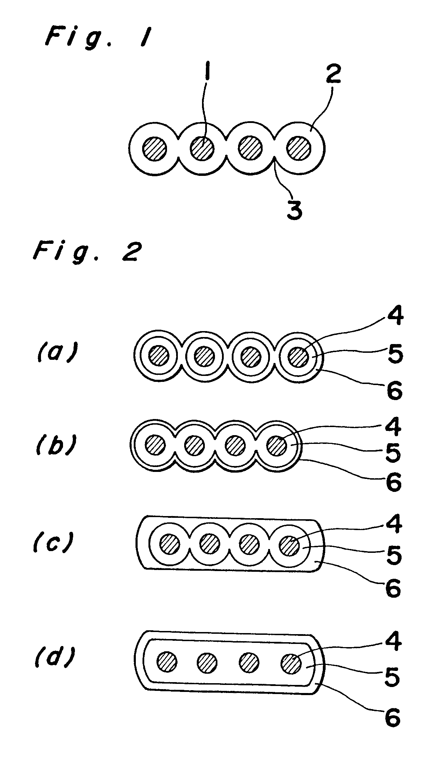

By contrast, the problem of cross-talk in multi core optical fibers of the present invention will become more apparent when considering a conventional multi core optical fiber as shown in Fig. 1. Such a multi core optical fiber has a cross-section, also shown in Fig. 1, in which the cores 1 are arranged in parallel to each other substantially equal distanced, and covered with the cladding 2. To integrate more cores each having a certain diameter in a unit cross sectional area, usually, the thickness of the cladding is decreased. Since the decrease of the thickness of the cladding results in the decrease of the distance between the adjacent cores, there arise some disadvantages such as cross-talk in communication. Therefore, the distance between the adjacent cores should be at least twice the core diameter and the maximum number to be integrated in a unit cross sectional area is limited.

Since the outer surface of the conventional multi core optical fiber has depressions 3, applied external stress is concentrated on these depressions so that it is more easily damaged than a single core fiber. In addition, since the depressions increase the outer surface area of the fiber so that it has larger probability of break, the fiber having good mechanical strength is not produced.

Hence, the object of the present invention is to provide a multi optical fiber, having improved mechanical strength and low cross-talk even if the adjacent cores are spaced at stort distances.

According to the present invention, the above object is solved by a multi core optical fiber made of quartz glass, comprising only two cladding layers and at least two cores, the centers of which are arranged substantially on one line, distances between the centers of the adjacent cores being substantially the same in the longitudinal direction, a first cladding with a lower refractive index than the cores, covering the cores, and a second cladding, covering the first cladding, having a refractive index larger than the first cladding, but equal to or smaller than that of the core, so as to achieve the coupling of the cores' higher order modes to the second cladding, where these higher order modes are attenuated by being coupled to radiation modes, thereby reducing cross-talk between individual cores.

The multi core optical fiber of the present invention has the advantage, that the adjacent cores can be spaced at such short distances where normally a significant coupling of higher order modes between the individual cores would occur. This allows a very compact arrangement of the multi core optical fiber whilst at the same time reducing the unavoidable cross-talk between the cores. In addition, the multi optical fiber of the present invention possesses an improved mechanical strength, since it has less surface area than the conventional one shown in Fig. 1.

Further advantageous features and advantages of the present invention are set out in the embodiments in the subclaims 2 to 6.

The present invention will now become more apparent from the detailed description to follow taken in conjunction with the accompanying drawings.
Fig. 1 is a cross section of a conventional multi core optical fiber,
Figs. 2A to 2D are cross sections of the various embodiments of the multi core optical fiber of the invention,
Fig. 3 shows a distribution of the refractive index in the multi core optical fiber of the invention,
Fig. 4 shows relation between the ratio of the core diameter to the core distance and cross-talk (dB),
Fig. 5 shows relation between the mode degree M and cross-talk (dB), and
Fig. 6 shows relation between the mode degree M and the mode loss.

Figs. 2A to 2D show cross sections of various embodiments of the multi core optical fiber of the invention. In these embodiments, the optical fiber comprises four cores 4 and their centers are arranged substantially on one line with substantially equal distances. The first cladding 5 is provides with around the cores 4 and the second cladding 6, around the first one. In the embodiment of Fig. 2A, each core 4 is surrounded by the corresponding first cladding 5 and the second cladding 6 continuously surrounds the first one. In the embodiment of Fig. 2B, both the first and second claddings 5 and 6 continuously surround the cores 4. In the embodiment of Fig. 2C, both the first and second claddings 5 and 6 continuously surround the cores 4 and the depressions between the cores are filled with the second one to give a smooth outer surface. In the embodiment of Fig. 2D, the interface between the first and second claddings and the outer surface of the second one do not have any depression.

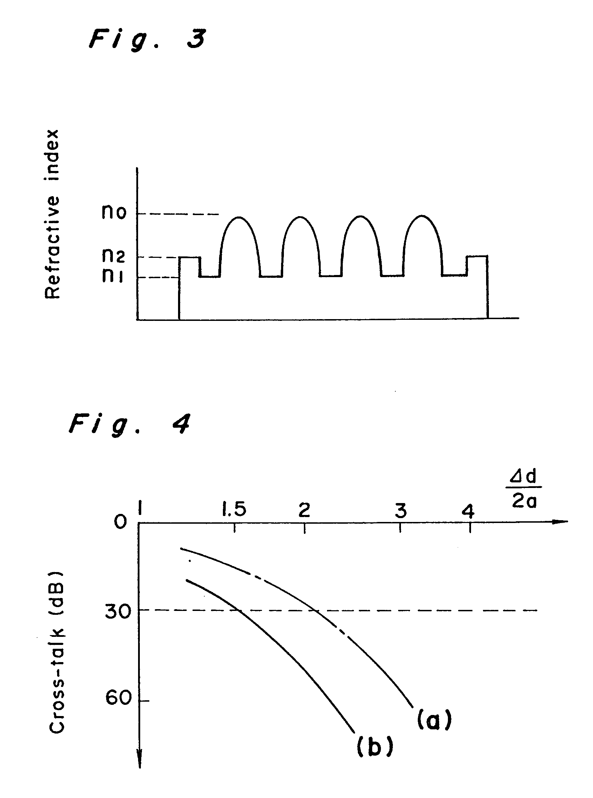

Fig. 3 shows a distribution of the refractive index along the line on which the core centers are present. The refractive index of the core is smaller than that of the first cladding and that of the first cladding is smaller than that of the second cladding.

Now, the relation between ratio of the core diameter to the core distance and cross-talk (dB) will be discussed.

In Fig. 4, the line (a) shows said relation for a conventional multi core optical fiber having the cross section of Fig. 1 and a length of 2 Km in which the core diameter is 20 to 100 micrometers, difference of the refractive indexes of the core and the first cladding is 1 % and which is used for multi mode transmission. The line (b) shows said relation for the multi core optical fiber having the cross section of Fig. 2B under the same conditions as above. Since, generally, the cross-talk must be lower than -30 dB, the ratio of the core diameter to the core distance should be larger than 2 in the conventional one as is clear from the line (a) of Fig. 4.

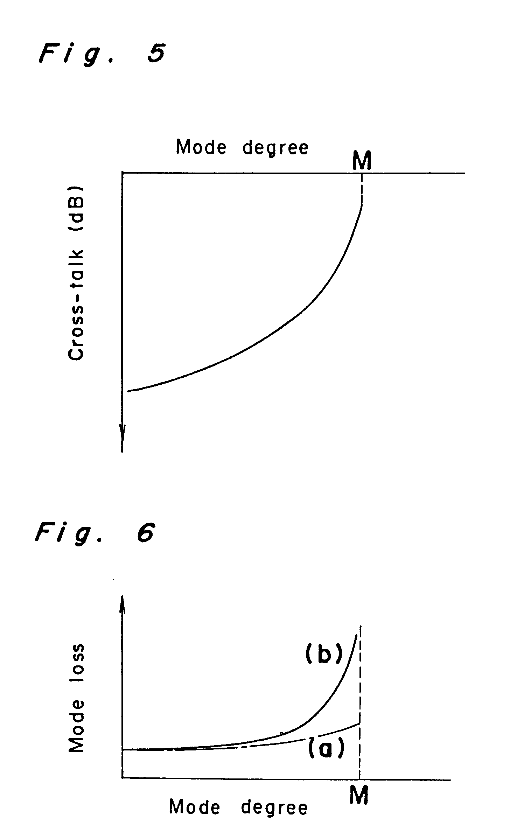

On the contrary, the refractive indexes in the fiber are determined by the following equations: 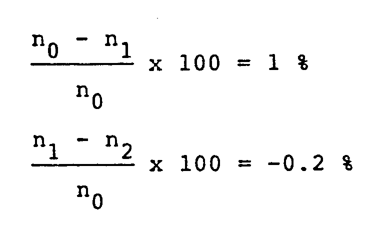
wherein n₀, n₁ and n₂ are refractive indexes of the core, the first cladding and the second cladding, respectively, and the ratio of the core distance to the core diameter is about 1.5 at the cross-talk of -30 dB. Therefore, the cross-talk is greatly decreased even if the core distance is significantly decreased. The reason for this is as follows:
Through the cores of the multi core optical fiber, a number of modes are transmitted. Since the fiber is a high frequency transmission line, a part of the light to be transmitted leaks out and passes through the cladding. The leakage amount of light increases as the degree of the mode increase as shown in Fig. 5. Since the multi core optical fiber of the invention has the second cladding having a larger refractive index than that of the first one, the high degree mode is easily coupled to a radiation mode, and practically, the attenuation of the high degree mode is effectively increased to that the increase of the cross-talk is prevented. This relation is shown in Fig. 6. Alternatively, when the attenuation in the second cladding is made larger than that of the first cladding, the same result is obtained.

Now, the strength of the optical fiber will be considered. In general, the optical fiber having less surface area is less damaged and its strength per unit surface area is improved. Since the optical fibers of the invention shown in Figs. 2C and 2D have less surface areas than the conventional one shown in Fig. 1, they have improved mechanical strength. When the glass surface has a depression, the external stress is concentrated on the depression resulting in the decrease of the mechanical strength. Therefore, the optical fiber of Figs. 2C and 2D has improved mechanical strength. In addition to this improvement, the optical fiber of the invention has further advantages such that it is easier for a plastic covering applied around the fiber to be peeled off since the fiber has smooth outer surface.

## Claims

1. A multi core optical fiber made of quartz glass comprising two cladding layers and at least two cores (4), wherein
a) the centers of the cross-sectional area of the cores are arranged substantially on a straight line and distances between adjacent centers are substantially the same,
b) the first cladding layer (5) has a lower refractive index than that of the cores (4) and covers the cores (4), and
c) the second outermost cladding (6) covers the first cladding (5) and has a refractive index larger than that of the first cladding layer (5), but equal to or smaller than that of the core,
so as to achieve the coupling of the cores' higher order modes to the second cladding, where these higher order modes are attenuated by being coupled to radiation modes, thereby reducing crosstalk between individual cores.

2. A multi core optical fiber according to claim 1, wherein said second cladding (6) has a smooth outer surface.

3. A multi core opitical fiber according to claim 1, wherein the first cladding (5) has a smooth outer surface.

4. A multi core optical fiber according to claim 1, wherein the first cladding (5) forms a continuous layer embedding all the cores (4).

5. A multi core optical fiber according to claim 1, wherein the core distance to core diameter ratio is 1.5 at a cross talk of less than -30dB between the cores (4).

6. A multi core optical fiber according to claim 1, wherein the absorption coefficient of the second cladding layer (6) is larger than that of the first cladding layer (5).

## Patentansprüche

1. Optische Multikernfaser aus Quarzglas, welche zwei Mantelschichten und wenigstens zwei Kerne (4) umfaßt, worin
a) die Zentren des Querschnittsgebietes der Kerne im wesentlichen auf einer geraden Linie angeordnet sind, und Abstände zwischen benachbarten Zentren im wesentlichen gleich sind,
b) die erste Mantelschicht (5) einen niedrigeren Brechungsindex als derjenige der Kerne (4) hat, und die Kerne (4) abdeckt, und
c) der zweite, äußerste Mantel (6) den ersten Mantel (5) abdeckt und einen Brechungsindex aufweist, welcher größer ist als derjenige der ersten Mantelschicht (5), jedoch gleich oder kleiner ist als derjenige des Kerns,
um die Kopplung der Moden höherer Ordnung der Kerne an den zweiten Mantel zu erzielen, wo diese Moden höherer Ordnung dadurch abgeschwächt werden, daß sie mit Strahlungsmoden gekoppelt werden, wodurch Übersprechen zwischen einzelnen Kernen reduziert wird.

2. Optische Multikernfaser nach Anspruch 1, dadurch gekennzeichnet, daß der zweite Mantel (6) eine glatte äußere Oberfläche hat.

3. Optische Multikernfaser nach Anspruch 1, dadurch gekennzeichnet, daß der erste Mantel (5) eine glatte äußere Oberfläche hat.

4. Optische Multikernfaser nach Anspruch 1, dadurch gekennzeichnet, daß der erste Mantel (5) eine kontinuierliche Schicht bildet, welche alle Kerne (4) einbettet.

5. Optische Multikernfaser nach Anspruch 1, dadurch gekennzeichnet, daß das Verhältnis Kernabstand zu Kerndurchmesser 1,5 beträgt bei einem Übersprechen von weniger als -30 dB zwischen den Kernen (4).

6. Optische Multikernfaser nach Anspruch 1, dadurch gekennzeichnet, daß der Absorptionskoeffizient der zweiten Mantelschicht (6) größer ist als derjenige der ersten Mantelschicht (5).

## Revendications

1. Fibre optique à plusieurs faisceaux réalisée en un verre de quartz, comprenant deux couches de gaine optique et au moins deux faisceaux (4), dans laquelle :
- les centres de la section droite des faisceaux sont placés pratiquement sur une ligne droite et les distances séparant des centres adjacents sont pratiquement les mêmes;
- la première couche de gaine optique (5) possède un indice de réfraction inférieur à celui des faisceaux (4) et recouvre les faisceaux (4); et
- la seconde gaine optique (6) la plus externe recouvre la première gaine optique (5) et possède un indice de réfraction supérieur à celui de la première couche de gaine optique (5) mais égal ou inférieur à celui du faisceau;
de façon à assurer le couplage des modes d'ordre supérieur des faisceaux avec la seconde gaine optique, ces modes d'ordre supérieur étant atténués par couplage aux modes de rayonnement, réduisant ainsi la diaphonie entre des faisceaux individuels.

2. Fibre optique à plusieurs faisceaux selon la revendication 1, dans laquelle ladite seconde gaine optique (6) possède une surface externe lisse.

3. Fibre optique à plusieurs faisceaux selon la revendication 1, dans laquelle la première gaine optique (5) possède une surface externe lisse.

4. Fibre optique à plusieurs faisceaux selon la revendication 1, dans laquelle la première gaine optique (5) forme une couche continue englobant tous les faisceaux (4).

5. Fibre optique à plusieurs faisceaux selon la revendication 1, dans laquelle le rapport entre la distance entre faisceaux et le diamètre de faisceau est de 1,5 pour une diaphonie inférieure à -30 dB entre les faisceaux (4).

6. Fibre optique à plusieurs faisceaux selon la revendication 1, dans laquelle le coefficient d'absorption de la seconde couche de gaine optique (6) est supérieur à celui de la première couche de gaine optique (5).
